(19) **Europäisches Patentamt / European Patent Office / Office européen des brevets**

(11) **EP 3 961 470 A1**

(12) # EUROPEAN PATENT APPLICATION

(43) Date of publication:
**02.03.2022 Bulletin 2022/09**

(21) Application number: **21193508.5**

(22) Date of filing: **27.08.2021**

(51) International Patent Classification (IPC):
**G06F 30/20** (2020.01)    G06F 111/02 (2020.01)
G06F 111/08 (2020.01)

(52) Cooperative Patent Classification (CPC):
**G06F 30/20;** G06F 2111/02; G06F 2111/08

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **28.08.2020   JP 2020144930**

(71) Applicants:
- **TOYOTA JIDOSHA KABUSHIKI KAISHA**
  **Toyota-shi, Aichi-ken, 471-8571 (JP)**
- **Interuniversity Microelectronics Centre**
  **3001 Leuven (BE)**

(72) Inventors:
- **SUGAI, Tomotaka**
  **TOYOTA-SHI, AICHI-KEN, 471-8571 (JP)**
- **SHINTANI, Kohei**
  **TOYOTA-SHI, AICHI-KEN, 471-8571 (JP)**
- **COUCKUYT, Ivo**
  **B-3001 LEUVEN (BE)**
- **KNUDDE, Nicolas**
  **B-3001 LEUVEN (BE)**
- **QING, Jixiang**
  **B-3001 LEUVEN (BE)**
- **DHAENE, Tom**
  **B-3001 LEUVEN (BE)**

(74) Representative: **Cabinet Beau de Loménie**
  **158, rue de l'Université**
  **75340 Paris Cedex 07 (FR)**

(54) **PARALLEL PROCESSING DESIGNING DEVICE AND PARALLEL PROCESSING DESIGNING METHOD**

(57)    A parallel processing designing device includes: an observation point computing section that, in a case in which an order of plural design variables exceeds a predetermined order, eliminates a design variable that has a low contribution to designing, and for each of plural design variables that are less than or equal to the predetermined order, computes plural observation points for searching for a region in which a performance relating to the design variable is executable, by using an acquisition function and a penalty function; a probability distribution computing section that, for each of the plural performances, computes a probability distribution of the performance being executable at the computed plural observation points; and a multiple performance executable region outputting section that outputs, as a multiple performance executable region, an infinite product of the probability distributions that are respectively computed for the plural performances.

FIG.4

**EP 3 961 470 A1**

## Description

BACKGROUND

Technical Field

The present disclosure relates to a parallel processing designing device and a parallel processing designing method that relate to the designing of a structural body such as a vehicle body or the like.

Related Art

One important topic in the designing of a structural body is the establishment of a designing method that can optimize each of plural performances (multiple performances) such as strength, rigidity, lightening of weight, suppressing of vibrations and the like that, depending on the case, are contradictory. Methods are being researched that, simultaneously and in parallel, optimize each of multiple performances by computer simulation.

In Philipp Hennig and Christian J. Schuler, "Entropy Search for Information-Efficient Global Optimization", Journal of Machine Learning Research, vol. 13, no. Jun, pp. 1809-1837, 2012 (Document 1), in the case of designing a product, a region in which the performance that is the object is established is determined plural, existing, constraint conditions. As the method for searching for the solution, design variables, which optimize an Entropy Search (ES) that is an acquisition function, are searched for by using Bayesian optimization. Further, a method, which searches only for limited observation points by using ES and which models an executable region with sufficient accuracy, is disclosed.

However, in the disclosure of Document 1, in a case in which there are many design variables, e.g., a case in which there are 30 dimensions or more, the search space increases exponentially, and efficient searching is difficult.

SUMMARY

The present disclosure provides a parallel processing designing device and a parallel processing designing method that may efficiently search for an executable region of multiple performances.

A first aspect of the present disclosure is a parallel processing designing device including: an observation point computing section that, in a case in which an order of plural design variables exceeds a predetermined order, eliminates a design variable that has a low contribution to designing, and, for each of plural design variables that are less than or equal to the predetermined order, computes plural observation points that are for searching for a region in which a performance relating the design variable is executable, by using an acquisition function that relates to searching for the executable region and a penalty function that expresses a region in which the observation points cannot be acquired in the acquisition function; a probability distribution computing section that, for each of the plural performances, computes a probability distribution of the performance being executable at the computed plural observation points; and a multiple performance executable region outputting section that outputs, as a multiple performance executable region, an infinite product of the probability distributions that are computed respectively for the plural performances.

By eliminating dimensions that has a low contribution to computation and reducing dimensions, the parallel processing designing device of the first aspect may suppress an exponential increase in the computing costs, and enables real handling of high-dimensional designing.

Further, the parallel processing designing device of the first aspect may enable more efficient searching for observation points, by using a penalty function that expresses regions at which observation points cannot be acquired in the acquisition function.

In a second aspect of the present disclosure, in the above-described first aspect, the observation point computing section may eliminate a design variable for which variance of plural data that exist in a design space expressed by the design variable, is less than or equal to a predetermined threshold value.

The parallel processing designing device of the second aspect may reduce the dimensions of the design variables by eliminating design variables for which the variance of plural data is a predetermined threshold value or less.

In a third aspect of the present disclosure, in the above-described first aspect or second aspect, the acquisition function may be used in searching a vicinity of a boundary of the executable region and a non-executable region.

The parallel processing designing device of the third aspect may acquire observation points that exist in the vicinity of the boundary between an executable region and a non-executable region.

In a fourth aspect of the present disclosure, in any one of the above-described first aspect through third aspect, the penalty function may be defined on the basis of Lipschitz continuity of a black box function that is modeled by using Gaussian process regression.

The parallel processing designing device of the fourth aspect may limit the regions in which observation points are acquired, on the basis of Lipschitz continuity in which there exists an upper limit of the absolute values of the slopes of straight lines that connect two arbitrary points on a graph.

In a fifth aspect of the present disclosure, in any one of the above-described first aspect through fourth aspect, the observation point computing section may use a point, which makes the acquisition function a maximum, as an initial observation point, and may use points, at which a product of the acquisition function and the penalty function becomes a maximum, as other observation points.

The parallel processing designing device of the fifth aspect may simultaneously acquire plural observation points by computing the maximum value of the acquisition function, and the maximum value of the product of the acquisition function and the penalty function, which can be computed simultaneously in the parallel processing.

A sixth aspect of the present disclosure is a parallel processing designing method including: an observation point computing step of, in a case in which an order of plural design variables exceeds a predetermined order, eliminating a design variable that has a low contribution to designing, and, for each of plural design variables that are less than or equal to the predetermined order, computing plural observation points that are for searching for a region in which a performance relating to the design variable is executable, by using an acquisition function that relates to searching for the executable region and a penalty function that expresses a region in which the observation points cannot be acquired in the acquisition function; a probability distribution computing step of, for each of the plural performances, computing a probability distribution of the performance being executable at the computed plurality of observation points; and a multiple performance executable region outputting step of outputting, as a multiple performance executable region, an infinite product of the probability distributions that are computed respectively for the plural performances.

By eliminating dimensions that has a low contribution to computation and reducing dimensions, the parallel processing designing method of the sixth aspect may suppress an exponential increase in the computing costs, and enables real handling of high-dimensional designing.

Further, the parallel processing designing method of the sixth aspect may enable more efficient searching for observation points, by using a penalty function that expresses regions at which observation points cannot be acquired in the acquisition function.

In a seventh aspect of the present disclosure, in the above-described sixth aspect, the observation point computing step may eliminate a design variable for which variance of a plurality of data that exist in a design space expressed by the design variable, is less than or equal to a predetermined threshold value.

The parallel processing designing method of the seventh aspect may reduce the dimensions of the design variables by eliminating design variables for which the variance of plural data is a predetermined threshold value or less.

In an eighth aspect of the present disclosure, in the above-described sixth aspect or seventh aspect, the acquisition function may be used in searching a vicinity of a boundary of the executable region and a non-executable region.

The parallel processing designing method of the eighth aspect may acquire observation points that exist in a vicinity of the boundary between an executable region and a non-executable region.

In a ninth aspect of the present disclosure, in any one of the above-described sixth aspect through eighth aspect, the penalty function may be defined on the basis of Lipschitz continuity of a black box function that is modeled by using Gaussian process regression.

The parallel processing designing method of the ninth aspect may limit the regions in which observation points are acquired, on the basis of Lipschitz continuity in which there exists an upper limit of the absolute values of the slopes of straight lines that connect two arbitrary points on a graph.

In a tenth aspect of the present disclosure, in any one of the above-described sixth aspect through ninth aspect, the observation point computing step may use a point, which makes the acquisition function a maximum, as an initial observation point, and may use points, at which a product of the acquisition function and the penalty function becomes a maximum, as other observation points.

The parallel processing designing method of the tenth aspect may simultaneously acquire plural observation points by computing the maximum value of the acquisition function, and the maximum value of the product of the acquisition function and the penalty function, which can be computed simultaneously in the parallel processing.

In accordance with the above-described aspects, the parallel processing designing device and the parallel processing designing method of the present disclosure may efficiently search for an executable region of multiple performances.

BRIEF DESCRIPTION OF THE DRAWINGS

Exemplary embodiments will be described in detail based on the following figures, wherein:

Fig. 1 is a block drawing showing a concrete structure of a parallel processing designing device relating to an exemplary embodiment of the present disclosure;
Fig. 2 is a functional block drawing of a CPU of the parallel processing designing device relating to the exemplary embodiment of the present disclosure;

Fig. 3 is a schematic drawing of system designing in the exemplary embodiment of the present disclosure;

Fig. 4 is a flowchart relating to the deriving of an executable region of active learning relating to the exemplary embodiment of the present disclosure;

Fig. 5 is a flowchart in which details of step 406 of Fig. 4 are given;

Fig. 6 is a schematic drawing showing an example of regression of a one-dimensional function by using Gaussian process regression;

Fig. 7 is a probability distribution of a constraint condition that is derived by Gaussian process regression;

Fig. 8 is a schematic drawing of dimension compression in the exemplary embodiment of the present disclosure;

Fig. 9 is a schematic drawing showing results of computation by acquisition function $\alpha(x)$;

Fig. 10 is an explanatory drawing showing Lipschitz continuity;

Fig. 11A is an explanatory drawing that shows a case in which a point at which the acquisition function becomes a maximum is acquired as a first (initial) observation point;

Fig. 11B is an explanatory drawing that shows a case in which a second (the next) observation point is acquired by using a penalty function;

Fig. 11C is an explanatory drawing that shows a case in which a third (the one after the next) observation point is acquired; and

Fig. 12 is a schematic drawing that compares an F1 score of a conventional method and an F1 score of the present exemplary embodiment.

DETAILED DESCRIPTION

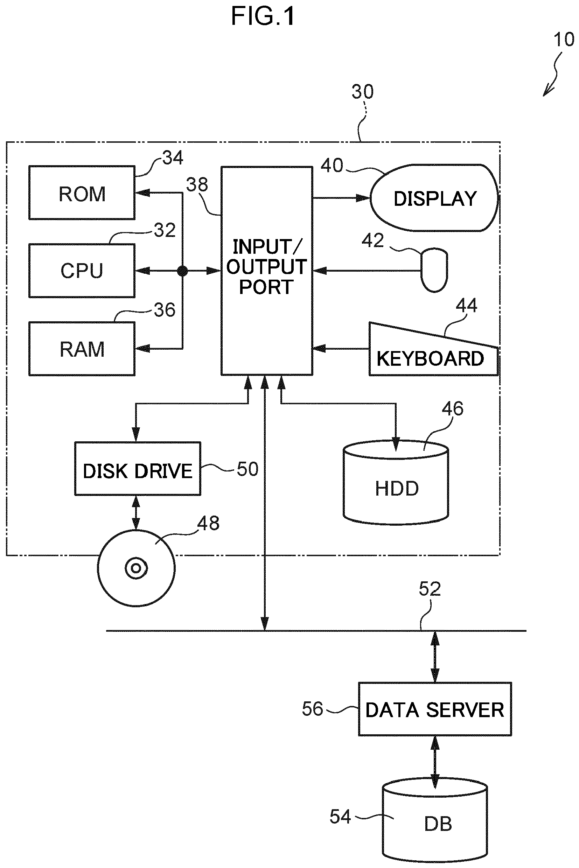

A parallel processing designing device and a parallel processing designing method relating to a present exemplary embodiment are described hereinafter by using Fig. 1. Fig. 1 is a block drawing showing an example of a concrete structure of a parallel processing designing device 10 relating to an exemplary embodiment of the present disclosure.

The parallel processing designing device 10 is configured to include a computer 30. The computer 30 has a CPU 32, a ROM 34, a RAM 36, and an input/output port 38. As an example, the computer 30 is preferably a type that can execute advanced computing processings at high speed, such as an engineering workstation, a supercomputer, or the like.

At the computer 30, the CPU 32, the ROM 34, the RAM 36 and the input/output port 38 are connected to one another via various busses such as an address bus, a data bus, a control bus, and the like. A display 40, a mouse 42, a keyboard 44, a hard disk (HDD) 46, and a disk drive 50 that reads-out information from any of various types of disks 48 (e.g., a CD-ROM, a DVD, or the like), are respectively connected to the input/output port 38 as various types of input/output devices.

Further, a network 52 is connected to the input/output port 38, and transmitting and receiving of information to and from various devices that are connected to the network 52 are possible. In the present exemplary embodiment, a data server 56 to which a database (DB) 54 is connected is connected to the network 52, and transmitting and receiving of information to and from the DB 54 are possible.

Data relating to parallel processing designing and the like are stored in advance in the DB 54. The storing of information into the DB 54 may be registering by the computer 30 or the data server 56, or may be registering by another device that is connected to the network 52.

In the present exemplary embodiment, explanation is given of a case in which data of parallel processing designing and the like are stored in the DB 54 that is connected to the data server 56. However, the information of the DB 54 may be stored in the HDD 46 that is built into the computer 30, or in an external storage device such as an externally attached hard drive or the like.

A parallel processing designing program for parallel processing designing is installed in the HDD 46 of the computer 30. In the present exemplary embodiment, parallel processing designing is executed by the CPU 32 executing the parallel processing designing program. Further, the CPU 32 causes the display 40 to display the results of processing by the parallel processing designing program. Note that there are several methods for installing the parallel processing designing program of the present exemplary embodiment in the computer 30. For example, the parallel processing designing program is installed in the HDD 46 due to the parallel processing designing program being stored together with a set-up program on a CD-ROM or a DVD or the like, and the disk being set in the disk drive 50, and the CPU 32 executing the set-up program. Or, the parallel processing designing program may be installed in the HDD 46 by communication with another information processing device that is connected to the computer 30 via a dial-up line or the network 52.

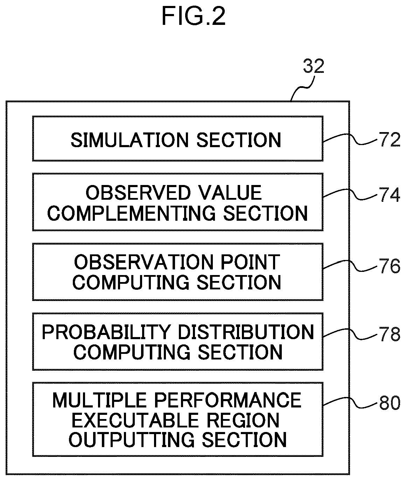

Fig. 2 is a functional block drawing of the CPU 32 of the parallel processing designing device 10. Description is given of the various functions that are realized by the CPU 32 of the parallel processing designing device 10 executing the parallel processing designing program. The parallel processing designing program has a simulation function that acquires observed values for each of plural performances by simulation, an observed value complementing function that complements discrete observed values that have been acquired and outputs continuous predicted values and predicted errors for each of the plural performances, an observation point computing function that computes plural observation points for searching for regions in which the plural performances can be executed respectively, a probability distribution computing function that computes the probability distributions at which the plural performances can be executed respectively at the plural observation points, and a multiple performance executable region outputting function that outputs, as a multiple performance executable region, the infinite product of the probability distributions that have been computed for the plural performances respectively. Due to the CPU 32 executing the parallel processing designing program that has these respective functions, the CPU 32 functions as a simulation section 72, an observed value complementing section 74, an observation point computing section 76, a probability distribution computing section 78, and a multiple performance executable region outputting section 80.

Parallel processing designing derives an executable region that can optimize each of plural, respectively different types of performances such as strength, rigidity, lightening of weight, suppressing of vibrations, and the like of the object of designing which, depending on the case, are contradictory performances. The deriving of the executable region is generally carried out in accordance with the following processes. First, a model between the variables relating to a performance, and the responses of these variables, is defined. Next, candidates for an executable region are acquired by random sampling on the previously-defined model. Then, a sample that satisfies constraint conditions of the responses is extracted from the acquired results. Although these processes are simple in principle, if there is high dimensionality of the design variables, the space that is to be searched expands exponentially, and, as a result, the computing costs become extremely large.

In the present exemplary embodiment, an exponential increase in the computing costs may be suppressed by using dimension compression that eliminates dimensions that has a low contribution to computation.

Further, in the present exemplary embodiment, by expressing the executable regions by probability distributions, the executable regions of the respective performances of multiple performances can be determined independently, and, by multiplying the executable regions of the respective performances, the multiple performance executable region can be derived easily. Further, even in a case in which a new constraint condition is implemented, by independently deriving a probability distribution relating to the new constraint condition and multiplying the derived probability distribution by the above-described multiple performance executable region, a multiple performance executable region that takes the new constraint condition into consideration can be derived.

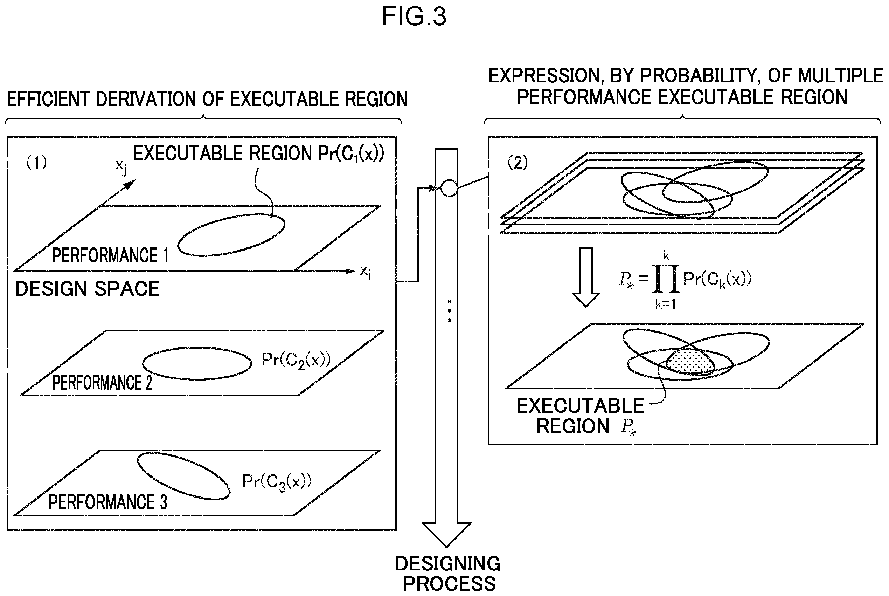

Fig. 3 is a schematic drawing of system designing in the present exemplary embodiment. (1) in Fig. 3 is the initial step of designing, and the executable regions that establish the constraint conditions of the respective performances that are performance 1, performance 2, and performance 3 are efficiently derived as probability distributions $Pr(C_k(x))$ ($k = 1, ..., K$). $Pr(C_k(x))$ in the present exemplary embodiment is as follows, from the probabilities relating to the realization of the respective performances. $C_k(x)$ is a Boolean-valued function in which x is a variable.

$$0 \le Pr(C_k(x)) \le 1$$

(2) in Fig. 3 illustrates an example of expression, by probability, of a multiple performance executable region. As described above, because the probability distributions by which the respective performances 1 through 3 are realized are $Pr(C_k(x))$, the multiple performance executable region, which is the region in which performances 1 through 3 are realized simultaneously, is expressed as the infinite product of the probability distributions relating to the respective performances. In actual designing, cases in which there are 30 or more dimensions of design variables also are possible. Therefore, the search spaces relating to the deriving of the probability distributions expand exponentially, and efficient searching is difficult. In the present exemplary embodiment, as will be described hereinafter, the computing load may be suppressed by dimension reduction that eliminates design variables that has a low contribution to designing.

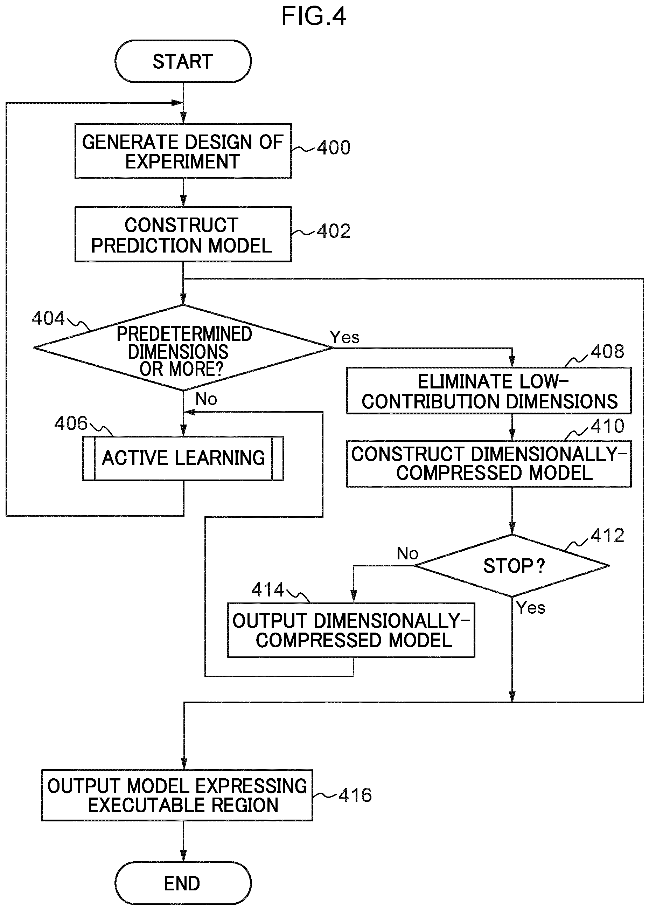

Fig. 4 is an example of a flowchart relating to the deriving of an executable region of the active learning relating to the present exemplary embodiment. The processing shown in Fig. 4 is carried out due to the CPU 32 reading-out a program from the ROM 34 or the disk drive 50, and expanding and executing the program in the RAM 13. In the processing shown in Fig. 4, conditions for realizing multiple performances must be inputted as a prerequisite. As an example, the conditions that are inputted are the following constraint function $g_k(x)$ for each performance of the multiple performances. The subscript k in the constraint function is the order of the constraint condition, and is also an index for each performance of the multiple performances. K is the maximum order of the variables that structure the multiple performances.

$$g_k(x) \le 0 \,, k \in \{1, 2, \ldots, K\}$$

The probability of each performance of the multiple performances being executable is as per following Formula (1). The $C_k(x)$ in the left side of Formula (1) is, as described above, a Boolean-valued function in which x is the variable. The $\delta_k$ in the right side of Formula (1) is a small, positive value that expresses the allowable error.

$$\Pr\big(C_k(x)\big) = \Pr\big(g_k(x) < 0\big) \ge 1 - \delta_k \qquad \cdots (1)$$

Further, the multiple performance executable region, which is the region in which the performances k (k = 1, 2, ..., K) are realized simultaneously, is the infinite product of the probabilities relating to the respective performances, and is as per following Formula (2).

$$\mathcal{P}_* = \prod_{k=1}^{K} \Pr\big(C_k(x)\big) \qquad \cdots (2)$$

In step 400, the design of an experiment for deriving an executable region of the multiple performances y, such as strength, rigidity, lightening of weight, suppressing of vibrations, and the like with respect to variable x that is the position of the structural body or the inertial moment or the like that is applied to the structural body, is generated. Further, in step 400, the design that is defined by the design for the experiment is evaluated by simulation by CAE (Computer Aided Engineering) or the like. For example, the value of y that corresponds to variable x is derived discretely as an observed value, by simulation by CAE or the like.

In step 402, constructing of a prediction model is carried out. The present exemplary embodiment uses the method of Gaussian process regression that enables the interpolation and prediction of the observed value y by taking into consideration the correlation of the observed value y with respect to the variable x. Generally, Gaussian process regression determines the correlation between the variable x and the observed value y by a Gaussian distribution, and has the feature of being able to not only continuously interpolate the discrete observed values y probability-wise, but also being able to compute the predicted errors.

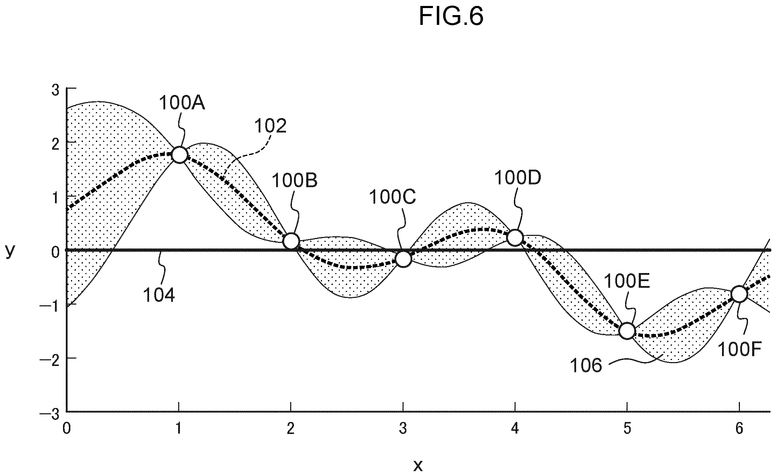

Fig. 6 is a schematic drawing showing an example of regression of a one-dimensional function by using Gaussian process regression. Curve 102, which supposes a case in which observed values 100A, 100B, 100C, 100D, 100E, 100F are continuous, is shown in Fig. 6. As shown in Fig. 6, the curve 102 is a continuous function that corresponds to the variable x. Because the curve 102 is a continuous function, not only are interpolation and prediction of discrete data possible, but differentiation by variable x also is possible. In Fig. 6, regions of predicted errors 106 exist at the periphery of the curve 102. The regions of the predicted errors 106 are narrow in a case in which the reliability of the predicted values expressed by the curve 102 is high, and are wide in cases in which the reliability is low. Inequality constraint value 104 of y = 0 is shown as an example in Fig. 6. In the present exemplary embodiment, a region in which the response y is smaller than the inequality constraint value 104 is defined as an executable region.

In the present exemplary embodiment, cumulative distribution function (CDF) for variable x is computed by using complementing of the discrete data obtained by Gaussian process regression, and the predicted errors 106 and the inequality constraint value 104.

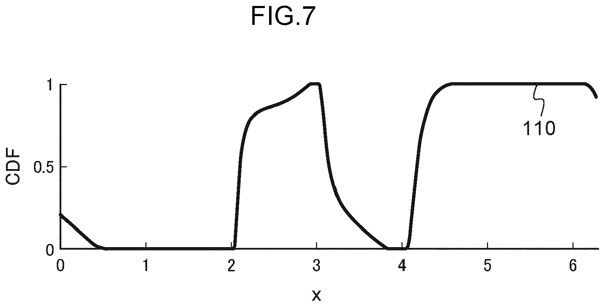

Fig. 7 is an example of the probability distribution of a constraint condition that is derived by Gaussian process regression. In Fig. 7, the horizontal axis is the variable x, and the vertical axis is the value of the cumulative distribution function. Cumulative distribution function 110 of Fig. 7 expresses the probability in a case in which the value of y in Fig. 6 is less than or equal to the inequality constraint value 104. When cumulative distribution function $\Phi$ is used, above Formula (1) becomes following Formula (1A), and the probability distribution $\Pr(C_k(x))$ for variable x is derived from the cumulative distribution function $\Phi$. The b in the following formula is a numerical value relating to a lower layer boundary 134 that is described later. Further, $\delta(x)$ in the following formula is the predicted deviation that is computed by the computing process of Gaussian process regression, and $_\mu(x)$ is the predicted average value.

$$\Pr\big(C_k(x)\big) = \Pr(g_k(x) < 0) = \Phi\left(\frac{b - \mu(x)}{\sigma(x)}\right) \quad \cdots (1A)$$

In the present exemplary embodiment, observation points for searching for a multiple performance executable region in the design space are computed by using the results (predicted values, predicted errors) of the Gaussian process regression. However, if the order of the design variables is high-dimensional, the search space expands exponentially. In step 404, it is determined whether or not the order of the design variables of the prediction model that is constructed by using Gaussian process regression is less than or equal to predetermined dimensions. The predetermined dimensions are, for example, any dimensions from 10 dimensions to 30 dimensions.

If the order of the design variables of the prediction model is less than or equal to the predetermined dimensions in step 404, the process moves on to step 406. If the order of the design variables of the prediction model is not less than or equal to the predetermined dimensions in step 404, the process moves on to step 408.

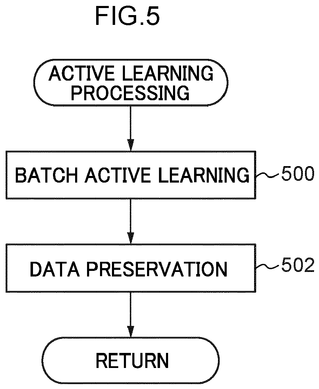

In step 406, observation points are searched for by using a penalty function that is described hereafter in the same way as the acquisition function that is described hereafter, and the training data is updated by adding the new observation points that have been found to the training data of the active learning. Details of the processing of step 406 are described later by using Fig. 5 and the like.

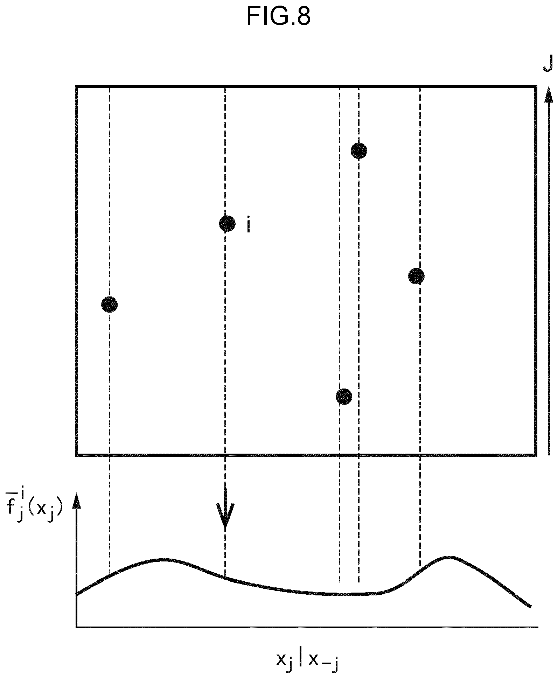

In step 408, the dimensions that has a low contribution are eliminated. In the present exemplary embodiment, dimensions whose contribution to the designing are low are detected by using VAR (Variance Average Relevance). As shown in Fig. 8, in VAR, variances of the posterior average in the J direction are respectively computed with respect to the variable $x_j$ in a design space of i dimensions (i = 1, 2, ..., K), and the respective, computed variances are compared with a predetermined threshold value. As a result, cases in which the variance values are less than or equal to the threshold value are considered to not be significant, and dimension compression is carried out by eliminating the variables $x_j$ of the i dimensions for which such variances have been computed. The predetermined threshold value is determined by taking the computing load into consideration. For example, in a case in which it is acceptable even if the computing load is somewhat large, this threshold value is set to be low, and, in a case in which it is desired to keep the computing load low, this threshold value is set to be high.

In step 410, construction of a prediction model that has been dimensionally compressed is carried out. More concretely, the observed values y are complemented and the predicted errors and the like are computed for each variable x that has been dimensionally compressed by using the above-described Gaussian process regression.

In step 412, it is determined whether or not conditions for ending the processing are satisfied. The conditions for ending step 412 are defined by following formulas (3), (4), (5), respectively, and determination on the convergence of computation is carried out by using the ending condition expressed by Formula (5). Formula (5) expresses the proportion of regions for which determination on establishment/non-establishment cannot be sufficiently made with respect to the entire region, i.e., the proportion of regions at which observation points have not been computed with respect to the region relating to designing. $\delta_k$ in Formula (4) is a small, positive value that expresses the allowable error. Further, $\varepsilon$ in the right side of Formula (5) is a threshold value expressing the ending condition, and is a small, positive value. In a case in which the ending condition of the processing in step 412 is satisfied, the process moves on to step 416. In a case in which the ending condition of the processing in step 412 is not satisfied, the process moves on to step 414.

$$Z(x) = \Phi\left(\frac{b - \mu(x)}{\sigma(x)}\right) - \Phi\left(\frac{a - \mu(x)}{\sigma(x)}\right) \quad \cdots (3)$$

$$v_k(x) = \begin{cases} 1 & (\delta_k \le Z(x) \le 1 - \delta_k) \\ 0 & (Z(x) < \delta_k, \, 1 - \delta_k < Z(x)) \end{cases} \quad \cdots (4)$$

$$\frac{\int v_k(x)\ dx}{\int\ dx} < \epsilon \qquad \cdots (5)$$

In step 414, the dimensionally-compressed model that has been constructed is outputted, and is provided to the active learning of step 406.

In step 416, output of a model that expresses the executable regions is carried out, and the processing ends. If the executable regions of the respective performances can be determined as probability distributions $Pr(C_k(x))$, the multiple performance executable region that satisfies all of the performance constraints can be easily determined as a simultaneous probability distribution as shown by above Formula (2).

$$\mathcal{P}_* = \prod_{k=1}^{K} Pr\big(\mathcal{C}_k(x)\big) \qquad \cdots (2)$$

Fig. 5 is a flowchart listing the details of step 406 of Fig. 4. In step 500, plural observation points are sampled simultaneously and in parallel, and, by updating the prediction model that is based on Gaussian process regression, batch active learning that aims to improve the active learning process is carried out.

In conventional prediction models, each time one observation point is acquired, updating of the acquisition function and the regression model are carried out. However, in the present exemplary embodiment, the initial observation point is acquired by making the acquisition function be a maximum, and the remaining (the other) observation points define a penalty function that is based on Lipschitz continuity, and the point at which simultaneous establishment of the acquisition function and the penalty function becomes a maximum is acquired. From the above, plural points may be acquired simultaneously in parallel processing.

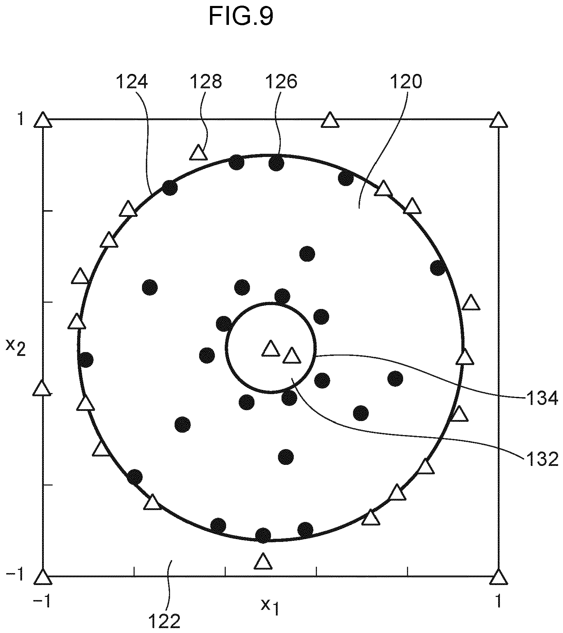

The acquisition function is $\alpha(x)$ that serves as an ES (Entropy Search) that is defined on the basis of Gaussian process regression. $\alpha(x)$ is used in searching for observation points in vicinities of the boundaries (upper layer boundary 124, lower layer boundary 134) between executable region 120 and non-executable regions 122, 132. Fig. 9 is a schematic drawing showing an example of the results of computation by $\alpha(x)$. In Fig. 9, executable observation points 126 and non-executable observation points 128 exist in the vicinities of the upper layer boundary 124 and the lower layer boundary 134, and therefore, $\alpha(x)$ is suited to searching the vicinity of the upper layer boundary 124 or the lower layer boundary 134. $\alpha(x)$ is expressed by following Formula (6). H(p(f(x)) in Formula (6) is the entropy (Shannon information amount).

$$\alpha(x) = 3H\big(p(f(x)|\mathcal{D},x)\big)$$
$$-H\big(p(f(x)|\mathcal{D},x,f(x) > b)\big)$$
$$-H\big(p(f(x)|\mathcal{D},x,a < f(x) < b)\big)$$
$$-H\big(p(f(x)|\mathcal{D},x,f(x) < a)\big) \qquad \cdots (6)$$

The penalty function is formulized by using Lipschitz continuity. In a Lipschitz continuous function that has Lipschitz continuity, the speed of change is limited, and real numbers that have finite values and are suited to the speed of change exist. Accordingly, it can be thought that there is an upper limit of the absolute value of the slope of a straight line that connects two arbitrary points on a graph of this function, and this upper limit value is defined as the Lipschitz constant L of that function.

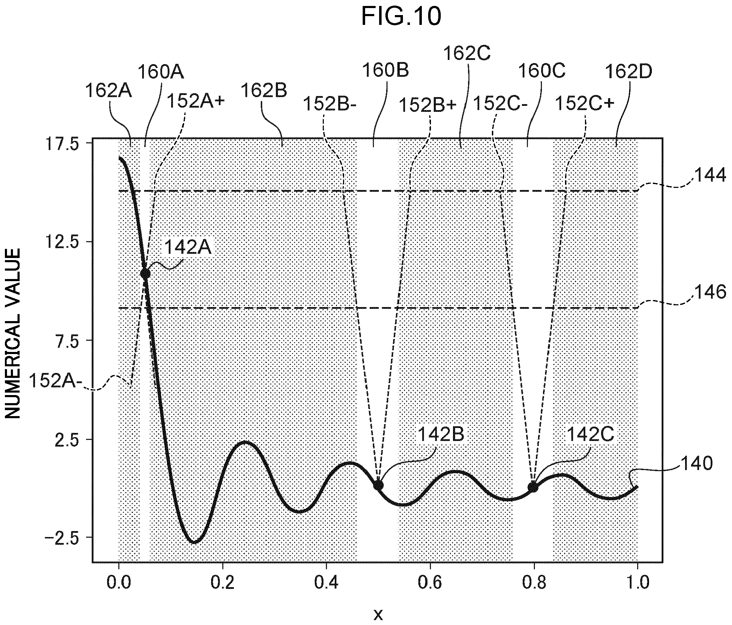

Fig. 10 is an explanatory drawing showing an example of Lipschitz continuity. A curve 140 of an evaluation function is shown in Fig. 10, and evaluation points 142A, 142B, 142C exist on the curve 140. Further, executable region boundaries 144, 146 are defined, and straight lines 152A+, 152A- of slope $\pm$ L that pass through the evaluation point 142A, straight lines 152B+, 152B- of slope $\pm$ L that pass through the evaluation point 142B, and straight lines 152C+, 152C- of slope $\pm$ L that pass through the evaluation point 142C, are respectively defined.

As described above, in Lipschitz continuity, at any point on the function, when a straight line of a slope of $\pm$ L is drawn, the absolute value of the slope expressed by two arbitrary points on the function is smaller than L. Accordingly, at region 160A that is defined by the intersections between the straight lines 152A+, 152A- and the executable region boundary 146, and at region 160B that is defined by the intersections between the straight lines 152B+, 152B- and the executable region boundary 146, and at region 160C that is defined by the intersections between the straight lines 152C+, 152C- and the executable region boundary 146, there is no possibility that the evaluation function will take on an executable region. Conversely, at regions 162A, 162B, 162C, 162D that are other than the regions 160A, 160B, 160C, there is the possibility that an executable region exists.

In the present exemplary embodiment, by defining the penalty function on the basis of Lipschitz continuity, the regions 160A, 160B, 160C at which observation points cannot be obtained in the same acquisition function are expressed. The penalty function is defined as following Formula (7) by using the Lipschitz continuity of the evaluation function (black box function) that is modeled by using the above-described Gaussian process regression, and the average $\mu$ and the deviation $\sigma$ that are computed from the posterior distribution. $\alpha$, $\beta$ in following Formula (7) respectively are values expressing the boundaries of the executable regions.

$$
\begin{aligned}
\varphi(\boldsymbol{x};\boldsymbol{x}_j) &= 1 - p(\boldsymbol{x} \in B_{r_{j_1}}, \boldsymbol{x} \in B_{r_{j_2}}) \\
&= 1 - p(\|\boldsymbol{x}_j - \boldsymbol{x}\| \leq |\frac{\alpha - f(\boldsymbol{x}_j)}{L}| , \|\boldsymbol{x}_j - \boldsymbol{x}\| \leq |\frac{\beta - f(\boldsymbol{x}_j)}{L}|) \\
&= \varphi(\frac{L\|\boldsymbol{x}_j - \boldsymbol{x}\| + \beta - \mu(\boldsymbol{x}_j)}{\sigma(\boldsymbol{x}_j)}) - \varphi(\frac{\alpha - L\|\boldsymbol{x}_j - \boldsymbol{x}\| - \mu(\boldsymbol{x}_j)}{\sigma(\boldsymbol{x}_j)}) + \\
&\quad max(\varphi(\frac{\beta - L\|\boldsymbol{x}_j - \boldsymbol{x}\| - \mu(\boldsymbol{x}_j)}{\sigma(\boldsymbol{x}_j)}) - \varphi(\frac{\alpha + L\|\boldsymbol{x}_j - \boldsymbol{x}\| - \mu(\boldsymbol{x}_j)}{\sigma(\boldsymbol{x}_j)}), 0) \quad \cdots (7)
\end{aligned}
$$

In the present exemplary embodiment, as described above, the initial observation point that makes the acquisition function a maximum is acquired, and, for the remaining observation points, points at which simultaneous establishment of the acquisition function and the penalty function becomes a maximum are acquired.

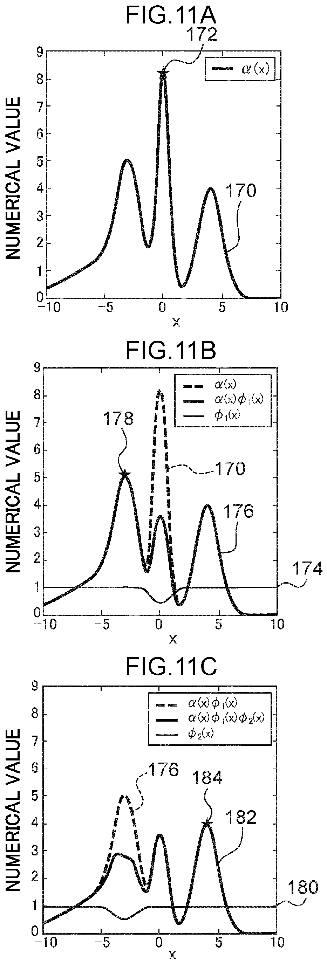

Fig. 11A through Fig. 11C are explanatory drawings showing an example of deriving plural observation points. Fig. 11A shows a case in which the point where the acquisition function becomes a maximum is acquired as the first (initial) observation point. Fig. 11B shows a case in which the second (the next) observation point is acquired by using the penalty function expressed by Formula (7). Fig. 11C shows a case in which the third (the one after the next) observation point is acquired.

In Fig. 11A, the point at which curve 170 of the acquisition function $\alpha(x)$ which is defined by Formula (6) becomes a maximum, is acquired as initial observation point 172.

In Fig. 11B, a second observation point 178 is acquired by using penalty function $\varphi_1(x)$ (j = 1 in Formula (7)) that is defined by Formula (7). Concretely, the second observation point 178 at which curve 176, which is expressed by the product of the acquisition function $\alpha(x)$ expressed by the curve 170 and the penalty function $\varphi_1(x)$ expressed by curve 174, becomes a maximum is extracted. By multiplying the penalty function $\varphi_1(x)$ by the acquisition function $\alpha(x)$, observation points can be acquired from the regions 162A, 162B, 162C, 162D that are other than the regions 160A, 160B, 160C at which observation points cannot be obtained in Fig. 10 for example.

In Fig. 11C, the penalty function is updated to penalty function $\varphi_2(x)$ (j = 2 in Formula (7)) that is expressed by curve 180, and a third observation point 184 at which curve 182, which is expressed by the product that is obtained by multiplying the updated penalty function $\varphi_2(x)$ by the product of the acquisition function $\alpha(x)$ and the penalty function $\varphi_1(x)$, becomes a maximum is extracted.

In the present exemplary embodiment, plural observation points can be located by extracting the maximum values of the products that are obtained by successively multiplying the penalty function $\varphi_j(x)$ (j = 1, 2, 3, ...) by the acquisition function $\alpha(x)$.

In step 502, by mapping the information of the acquired observation points in the previous observation model that was dimension-compressed, the training data of the active learning is updated, and the processing returns.

Formula (8) is a 30-dimensional Morris function, and shows a case in which searching for executable regions where the threshold value of the function falls within the range of 10% to 20%. Further, Formula (9) is a formula for computing the F1 score that is based on the precision and the recall.

$$f(x) = \alpha \sum_{i=1}^{k_1} \left( x_i + \beta \sum_{i<j=2}^{k_1} x_i x_j \right) \qquad \cdots (8)$$

$$\alpha = \sqrt{12} - 6\sqrt{0.1(k_1 - 1)}, \beta = 12\sqrt{0.1(k_1 - 1)}$$

$$F_1 = \left( \frac{2}{recall^{-1} + precision^{-1}} \right) = 2 \cdot \frac{precision \cdot recall}{precision + recall} \qquad \cdots (9)$$

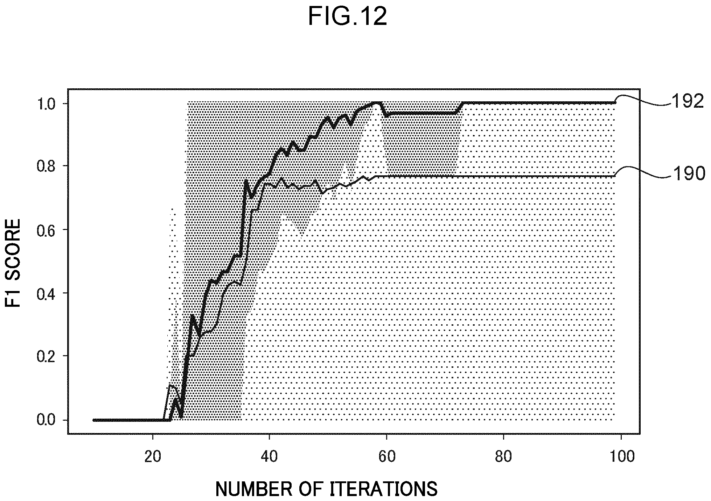

Fig. 12 is a schematic drawing showing F1 score 190 of an executable region search in accordance with a conventional method that is not accompanied by the dimension compression computed by Formulas (8) and (9), and F1 score 192 of an executable region search of the parallel processing designing method relating to the present exemplary embodiment. A case in which a predicted region and the solution region match is expressed by an F1 score of 1.0. As shown in Fig. 12, at the point in time at which computation was carried out 60 times, the F1 score 190 of the conventional method was around 0.8, but the F1 score 192 of the present exemplary embodiment was 1.0, and it can be said that the dimension compression relating to the present exemplary embodiment is effective.

As described above, in the present exemplary embodiment, at the time of determining a multiple performance executable region by using active learning, by eliminating dimensions that has a low contribution to computation and reducing dimensions, an exponential increase in the computing costs is suppressed, and real handling of high-dimensional designing may be made possible.

Further, in the present exemplary embodiment, by adding a penalty function, which is defined by using Lipschitz continuity, in the acquisition function that is based on Gaussian process regression, parallel processing of the observation point searching is made possible, and it is possible to make the search process even more efficient. In the present exemplary embodiment, for the initial observation point, the point at which the acquisition function becomes a maximum is acquired, and the other observation points are acquired by using the penalty function. The maximum value of the acquisition function, and the maximum value of the product of the acquisition function and the penalty function, may be computed simultaneously in the parallel processing, and therefore, plural observation points may be acquired simultaneously.

In the present exemplary embodiment, because high-dimensional designing may be handled in reality, a solution can be computed efficiently even in cases in which, in vehicle development, where there is a large number of design specifications of components whose ranges for establishment are directly linked to desired performances, or there is a large number of design variables such as control constants, or the like.

Further, in the present exemplary embodiment, by acquiring plural observation points by parallel processing, analysis of executable regions may be possible in a shorter time than in conventional methods. In cases in which it is necessary to proceed with analysis of executable regions with a limited amount of testing processes, a shortening of the processing time may be expected by carrying out processing not in a single process, but rather, simultaneously in plural processes.

In accordance with the present exemplary embodiment, for example, the deriving of engine mount specifications that satisfy a multiple performance executable region is possible. As an example, in studying specifications such as engine mount characteristics, engine mount shape and the like, 20 variables (dimensions) must be studied for one engine mount. However, in accordance with the present exemplary embodiment, due to the reducing of the design dimensions and the parallel processing of observation point acquisition, the derivation of a multiple performance executable region may be executed swiftly and accurately. As a result, an executable region of multiple performances may be located efficiently.

In the present exemplary embodiment, the acquisition function employs ES which is suited to searching for observation points in vicinities of the boundaries of the executable region 120 and the non-executable regions 122, 132. However, PoF (Probability of Feasibility) that is suited to searching for observation points within the executable region 120 may be employed.

Note that the "acquisition function" corresponds to the "acquisition function $\alpha(x)$" that was described in the Detailed Description of the present specification.

Note that any of various types of processors other than a CPU may execute the processings that are executed by the CPU reading-out software (programs) in the above-described respective exemplary embodiments. Examples of processors in this case include PLDs (Programmable Logic Devices) whose circuit structure can be changed after production such as FPGAs (Field-Programmable Gate Arrays) and the like, and dedicated electrical circuits that are processors having circuit structures that are designed for the sole purpose of executing specific processings such as ASICs (Application Specific Integrated Circuits) and the like, and the like. Further, the processings may be executed by one of these various types of processors, or may be executed by a combination of two or more of the same type or different types of processors (e.g., plural FPGAs, or a combination of a CPU and an FPGA, or the like). Further, the hardware structures of these various types of processors are, more concretely, electrical circuits that combine circuit elements such as semiconductor elements and the like.

Further, although the above-described respective exemplary embodiments describe an aspect in which the program is provided in the form of being stored in advance (installed) in the disk drive 50 or the like, the present disclosure is not limited to this. The program may be provided in a form of being stored on a non-transitory storage medium such as a CD-ROM (Compact Disc Read Only Memory), a DVD-ROM (Digital Versatile Disc Read Only Memory), a USB (Universal Serial Bus) memory, or the like. Further, the program may be in a form of being downloaded from an external device via a network.

(Supplementary Note 1)

A parallel processing designing device includes:

a memory; and
at least one processor connected to the memory, the processor configured to:

in a case in which an order of plural design variables exceeds a predetermined order, eliminate a design variable that has a low contribution to designing;
for each of plural design variables that are less than or equal to the predetermined order, compute plural observation points that are for searching for a region in which a performance relating the design variable is executable, by using an acquisition function that relates to searching for the executable region and a penalty function that expresses a region in which the observation points cannot be acquired in the acquisition function;
for each of the plural performances, compute a probability distribution of the performance being executable at the computed plural observation points; and
output, as a multiple performance executable region, an infinite product of the probability distributions that are computed respectively for the plural performances.

**Claims**

1.  A parallel processing designing device (10) comprising:

an observation point computing section (76) that is configured, in a case in which an order of a plurality of design variables exceeds a predetermined order, to eliminate a design variable that has a low contribution to designing, and, for each of a plurality of design variables that are less than or equal to the predetermined order, to compute a plurality of observation points that are for searching for a region in which a performance relating the design variable is executable, by using an acquisition function that relates to searching for the executable region and a penalty function that expresses a region in which the observation points cannot be acquired in the acquisition function;
a probability distribution computing section (78) that is configured, for each of the plurality of performances, to compute a probability distribution of the performance being executable at the computed plurality of observation points; and
a multiple performance executable region outputting section (80) that is configured to output, as a multiple performance executable region, an infinite product of the probability distributions that are computed respectively for the plurality of performances.

2.  The parallel processing designing device (10) of claim 1, wherein the observation point computing section (76) is configured to eliminate a design variable for which variance of a plurality of data that exist in a design space expressed by the design variable, is less than or equal to a predetermined threshold value.

3.  The parallel processing designing device (10) of claim 1 or 2, wherein the acquisition function is used in searching a vicinity of a boundary of the executable region and a non-executable region.

4.  The parallel processing designing device (10) of any one of claims 1 through 3, wherein the penalty function is defined on the basis of Lipschitz continuity of a black box function that is modeled by using Gaussian process regression.

5.  The parallel processing designing device (10) of any one of claims 1 through 4, wherein the observation point computing section (76) is configured to use a point, which makes the acquisition function a maximum, as an initial observation point, and to use points, at which a product of the acquisition function and the penalty function becomes a maximum, as other observation points.

6.  A parallel processing designing method comprising:

    an observation point computing step of, in a case in which an order of a plurality of design variables exceeds a predetermined order, eliminating a design variable that has a low contribution to designing, and, for each of a plurality of design variables that are less than or equal to the predetermined order, computing a plurality of observation points that are for searching for a region in which a performance relating to the design variable is executable, by using an acquisition function that relates to searching for the executable region and a penalty function that expresses a region in which the observation points cannot be acquired in the acquisition function; a probability distribution computing step of, for each of the plurality of performances, computing a probability distribution of the performance being executable at the computed plurality of observation points; and a multiple performance executable region outputting step of outputting, as a multiple performance executable region, an infinite product of the probability distributions that are computed respectively for the plurality of performances.

7.  The parallel processing designing method of claim 6, wherein the observation point computing step eliminates a design variable for which variance of a plurality of data that exist in a design space expressed by the design variable, is less than or equal to a predetermined threshold value.

8.  The parallel processing designing method of claim 6 or 7, wherein the acquisition function is used in searching a vicinity of a boundary of the executable region and a non-executable region.

9.  The parallel processing designing method of any one of claims 6 through 8, wherein the penalty function is defined on the basis of Lipschitz continuity of a black box function that is modeled by using Gaussian process regression.

10. The parallel processing designing method of any one of claims 6 through 9, wherein the observation point computing step uses a point, which makes the acquisition function a maximum, as an initial observation point, and uses points, at which a product of the acquisition function and the penalty function becomes a maximum, as other observation points.

# FIG.1

10

30

ROM — 34

38

40 — DISPLAY

32

CPU

INPUT/
OUTPUT
PORT

42

36

RAM

44

KEYBOARD

DISK DRIVE — 50

46

HDD

48

52

DATA SERVER — 56

54 — DB

# FIG.2

32

| SIMULATION SECTION | 72 |

| OBSERVED VALUE COMPLEMENTING SECTION | 74 |

| OBSERVATION POINT COMPUTING SECTION | 76 |

| PROBABILITY DISTRIBUTION COMPUTING SECTION | 78 |

| MULTIPLE PERFORMANCE EXECUTABLE REGION OUTPUTTING SECTION | 80 |

FIG.3

## FIG.4

START

GENERATE DESIGN OF
EXPERIMENT ~400

CONSTRUCT
PREDICTION MODEL ~402

404 PREDETERMINED
DIMENSIONS
OR MORE?

Yes → 408 ELIMINATE LOW-
CONTRIBUTION DIMENSIONS

No

406 ACTIVE LEARNING

410 CONSTRUCT DIMENSIONALLY-
COMPRESSED MODEL

412 STOP?

No

414 OUTPUT DIMENSIONALLY-
COMPRESSED MODEL

Yes

OUTPUT MODEL EXPRESSING
EXECUTABLE REGION ~416

END

# FIG.5

```
   ┌─────────────────────┐
   │   ACTIVE LEARNING   │
   │     PROCESSING      │
   └─────────────────────┘
              │
              ▼
   ┌─────────────────────┐
   │BATCH ACTIVE LEARNING│~500
   └─────────────────────┘
              │
              ▼
   ┌─────────────────────┐
   │ DATA PRESERVATION   │~502
   └─────────────────────┘
              │
              ▼
   ┌─────────────────────┐
   │      RETURN         │
   └─────────────────────┘
```

# FIG.6

FIG.7

## FIG.8

FIG.9

FIG.10

EP 3 961 470 A1

## FIG.11A

## FIG.11B

## FIG.11C

FIG.12

EP 3 961 470 A1

Europäisches
Patentamt

European
Patent Office

Office européen
des brevets

# EUROPEAN SEARCH REPORT

Application Number

EP 21 19 3508

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2010/153086 A1 (SATOH SHUHEI [JP]) 17 June 2010 (2010-06-17) * abstract * * paragraph [0014] * * paragraph [0027] * * paragraph [0096] * * the whole document * | 1-10 | INV. G06F30/20 ADD. G06F111/02 G06F111/08 |
| X | WO 2018/032052 A1 (UNIV MACQUARIE [AU]) 22 February 2018 (2018-02-22) * abstract * * paragraph [0005] * * paragraph [0044] * * paragraph [0129] * * the whole document * | 1-10 | |
| A | US 6 132 108 A (KASHIWAMURA TAKAYOSHI [JP] ET AL) 17 October 2000 (2000-10-17) * abstract * * paragraph [0001] * * the whole document * | 1-10 | |
| A,D | PHILIPP HENNIG ET AL: "Entropy Search for Information-Efficient Global Optimization", JOURNAL OF MACHINE LEARNING RESEARCH, vol. 13, 1 June 2012 (2012-06-01), pages 1809-1837, XP055399833, * the whole document * | 1-10 | TECHNICAL FIELDS SEARCHED (IPC) G06F |

The present search report has been drawn up for all claims

| Place of search | Date of completion of the search | Examiner |
|---|---|---|
| Munich | 18 January 2022 | Sohrt, Wolfgang |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 21 19 3508

This annex lists the patent family members relating to the patent documents cited in the above-mentioned European search report.
The members are as contained in the European Patent Office EDP file on
The European Patent Office is in no way liable for these particulars which are merely given for the purpose of information.

18-01-2022

| Patent document cited in search report | | Publication date | Patent family member(s) | | Publication date |
|---|---|---|---|---|---|
| US 2010153086 | A1 | 17-06-2010 | JP<br>US | 2010160787 A<br>2010153086 A1 | 22-07-2010<br>17-06-2010 |
| WO 2018032052 | A1 | 22-02-2018 | NONE | | |
| US 6132108 | A | 17-10-2000 | EP<br>JP<br>JP<br>US | 0855661 A2<br>3313040 B2<br>H10207926 A<br>6132108 A | 29-07-1998<br>12-08-2002<br>07-08-1998<br>17-10-2000 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **PHILIPP HENNIG ; CHRISTIAN J. SCHULER.** Entropy Search for Information-Efficient Global Optimization. *Journal of Machine Learning Research,* 2012, vol. 13 (Jun), 1809-1837